# EUROPEAN PATENT SPECIFICATION

(11) **EP 3 284 344 B1**
(45) Date of publication and mention of the grant of the patent: **07.12.2022**
(21) Application number: 16779994.9
(22) Date of filing: 09.04.2016
(51) Int. Cl.: A01K 63/04, C02F 3/06, A01K 61/54

(54) **PURIFICATION DEVICE AND AQUARIUM COMPRISING SAME**
REINIGUNGSVORRICHTUNG UND AQUARIUM DAMIT
DISPOSITIF DE PURIFICATION ET AQUARIUM LE COMPRENANT

(30) Priority: 12.04.2015 JP 2015081321
(43) Date of publication of application: 21.02.2018
(73) Proprietor: Ohtani, Hiroshi, Ohtsu-shi, Shiga 520-2101 (JP)
(72) Inventor: Ohtani, Hiroshi, Ohtsu-shi, Shiga 520-2101 (JP)
(74) Representative: Stöckeler, Ferdinand
(86) International application number: PCT/JP2016/061630
(87) International publication number: WO 2016/167203

(56) References cited:
- EP-A2- 0 586 805
- EP-A2- 1 872 655
- DE-A1- 3 048 479
- JP-A- H07 236 392
- JP-A- H09 163 895
- JP-A- H09 163 895
- JP-A- H11 188 375
- JP-B1- 5 410 631
- JP-B2- 4 096 218
- US-A- 3 827 560
- US-A- 4 620 929

## Description

### TECHNICAL FIELD

The present invention relates to a purification device configured to purify water and to an aquarium integrally incorporating the purification device and having a self-purification function.

### BACKGROUND ART

Aquatic creatures such as tropical fish have been broadly bred for an ornamental use at homes and the like. The main problem in the breeding is that water quality is lowered due to decomposition of excrement or feed of the aquatic creatures. The lowering of the water quality specifically means an increase in a harmful ammonia concentration. For preventing the lowering of the water quality, the water needs to be often replaced.

In recent years, a water purification technology has been developed. A system configured to decrease the ammonia concentration over a long period of time without water replacement has been proposed. Using, e.g., aerobic bacteria such as nitrifying bacteria or nitrous bacteria, ammonia is, by oxidation, nitrified into relatively-safe nitrate salt. Furthermore, anaerobic bacteria are used to perform denitrification for reducing the nitrate salt to nitrogen. Thus, a healthier environment can be obtained for the aquatic creatures.

Note that for efficiently purifying water, a purification system needs to be separately prepared outside a water tank. Thus, there are problems on the cost and the installation location.

Meanwhile, it has been proposed that a compact biological filtration layer is provided at the bottom of the water tank.

For example, a system including an anaerobic bacteria growth layer provided below an aerobic bacteria growth layer has been proposed. In this system, water permeability of the former layer is greater than that of the latter layer, and therefore, the function of anaerobic bacteria is improved. Thus, the efficiency of denitrification as a purification bottleneck process is increased as described above (e.g., Patent Literature 1).

Moreover, a purification system configured such that an aerobic bacteria growth layer, a facultative anaerobic bacteria growth layer, and an obligatory anaerobic bacteria growth layer are subsequently provided has been also proposed (e.g., Patent Literature 2).

DE 30 48 479 A1 teaches a water purification system in which water is clarified by passing it though through a gravel filter across its entire bottom area and through an elastic open-celled foam layer into a storage space at the bottom. The water enters a siphon pipe where it is mixed with air and lifted back to the surface of the water level. Bacteria formation in the area of the gravel filter may be accelerated by adding turf in tablet form.

EP 0 586 805 A2 discloses a filter for pond water and like water taken from open water surfaces and watercourses, in which a filter housing includes a filter compartment having single or multiple layers of filter material, which, for an upwardly running throughflow, is provided at the bottom with a sieve plate and at the top with an outlet.

US 4 620 929 A teaches a process for the removal of protein and degradation products thereof from water, wherein a filter material which has a large contact area is flushed by the water to be purified. In order to be able also to remove, in particular, the nitrate from the water, the filter material used is an inert carrier, such as plastics material, preferably foamed plastics material, expanded clay or the like, which contains bacteriophilic nutrients, such as lactose and/or dextrose and/or phthalic acid ester or the like. An aerobic and an anaerobic reaction zone are set up in the filter material, so that both nitrification and denitrification can take place in the filter material.

### CITATION LIST

### PATENT LITERATURE

PATENT LITERATURE 1: JP-A-11-188375
PATENT LITERATURE 2: Japanese Patent No. 5410631

### SUMMARY OF INVENTION

### PROBLEMS TO BE SOLVED BY THE INVENTION

The system in Patent Literature 1 is for the purpose of increasing the permeability of the anaerobic bacteria growth layer to generate a convection flow, thereby increasing denitrification efficiency. However, conditions for generating the convection flow are limited. For this reason, it is difficult to freely change the amount of water flow circulating in a biological filtration layer, for example. As a result, high purification efficiency cannot be obtained. Thus, there are restrictions on the density of breedable aquatic creatures.

In the system in Patent Literature 2, conditions for the facultative anaerobic bacteria layer for performing denitrification as bottleneck of the purification rate are not defined. Thus, there is a limitation on the purification rate. Moreover, a soil material is used for the obligatory anaerobic bacteria layer. Thus, a long period of time is needed until an environment where the obligatory anaerobic bacteria can work is obtained. For this reason, several months are needed as a start-up period. Moreover, during the start-up period, aquatic creatures can be grown only in a lower density.

Furthermore, in the systems of Patent Literatures 1 and 2, the thickness and permeation resistance of each layer need to be strictly designed for obtaining an optimal dissolved oxygen concentration for the anaerobic bacteria. For this reason, it is difficult to build the biological filtration layer.

The present invention has been made to solve the above-described problems. The present invention provides a purification device which can purify water with a much higher efficiency than a typical device and which has a short start-up period. Moreover, in an aquarium integrally incorporating the purification device, aquatic creatures can be bred in a high density. Furthermore, the time required for the purification function to be started-up is short. Furthermore, the aquatic creatures can be bred in a high density even during the start-up period.

### SOLUTIONS TO THE PROBLEMS

A purification device according to the present invention is a water purification device using a bacterium as specified in independent claim 1, and includes: a low-water-permeable biological filtration layer configured to purify water; and a pump unit configured to generate a water flow in the biological filtration layer.

An aquarium according to the present invention, as specified in independent claim 11, includes: the purification device, the purification device being integrated with a water tank. The replacement space is a breeding space for an aquatic creature at an upper portion of the water tank.

A further purification device according to the present invention is a water purification device using a bacterium to purify a water system with a water flow as specified in independent claim 12, and includes: a water channel block; and a low-water-permeable biological filtration layer provided above the water channel block and configured to purify water. The water channel block has a penetrating water channel, an opening of an inlet port of the water channel has an area larger than that of a water channel section, an upper inner wall portion of the water channel exhibits water permeability between the upper inner wall portion and the biological filtration layer.

### EFFECTS OF THE INVENTION

With the purification device according to the present invention, it is intended to build a mechanism similar to the efficient purification system of rivers. By the pump unit, water circulation corresponding to the natural water circulation generated by water evaporation and rainfall is produced to generate the water flow in the biological filtration layer including the useful purification bacterial group. Thus, the extremely-high-efficient purification device as compared to the typical system is provided.

Moreover, in the aquarium integrally incorporating the purification device, aquatic creatures can be bred in a high density. Moreover, the time required for the purification function to be started-up is short. Furthermore, the aquatic creatures can be bred in a high density even during the start-up period.

### BRIEF DESCRIPTION OF THE DRAWINGS

Fig. 1 is a side view of an aquarium of the present invention.
Fig. 2 is a sectional view of a biological filtration layer of the aquarium of the present invention.
Fig. 3 is an upper view of a filtrate water storage space of the aquarium of the present invention.
Fig. 4 is a side view of a purification device of a second embodiment of the present invention.
Fig. 5 is a use example of the purification device of the second embodiment of the present invention.
Fig. 6 is another use example of the purification device of the second embodiment of the present invention.
Fig. 7 is a side view of a purification device of a third embodiment of the present invention.
Fig. 8 is a use example of the purification device of the third embodiment of the present invention.
Fig. 9 is a conceptual diagram on water circulation at a river for describing characteristics of the present invention.
Fig. 10 is a side view and a front view of a purification device of a fourth embodiment of the present invention.
Fig. 11 is a use example of the purification device of the fourth embodiment of the present invention.

### DESCRIPTION OF THE EMBODIMENTS

A purification device according to the present invention and an aquarium integrally provided with the purification device will be described below. An aquarium of a first embodiment will be described, and then, a purification device of a second embodiment will be described. Furthermore, a purification device of a third embodiment in another form will be described. In addition, a purification device of a fourth embodiment using a similar purification mechanism and used at rivers and the like will be described.

Note that in description below, a favorable example of the present invention will be disclosed. The present invention is not limited to these embodiments.

### First Embodiment

In the aquarium of the present invention described below, a water tank as a container, in which aquatic creatures are grown, is integrally provided with a purification device. This aquarium can be used as a water tank at a home or an aquarium.

### <Configuration of Aquarium>

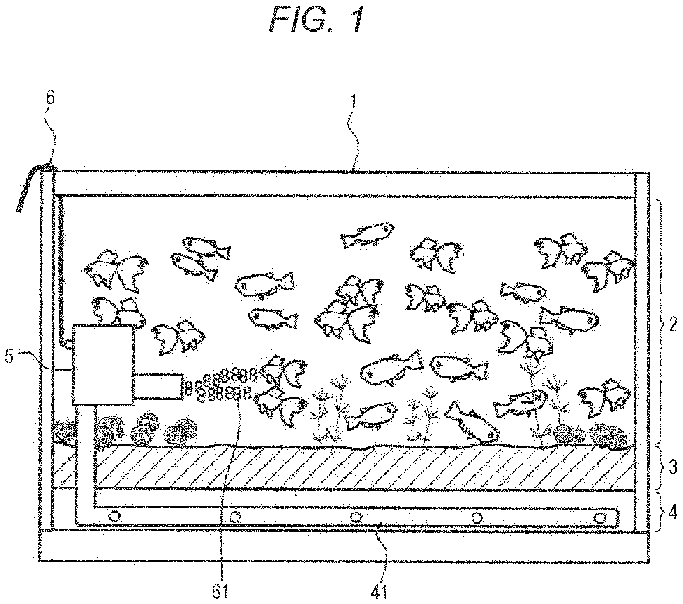

A configuration of the aquarium of the present invention will be described with reference to Figs. 1 to 3. Fig. 1 is a side view of the aquarium.

The aquarium mainly includes a water tank 1, a breeding space 2 as a space provided at an upper portion of the water tank 1, a low-water-permeable biological filtration layer 3 provided below the breeding space 2, a filtrate water storage space 4 provided below the biological filtration layer 3, a pump unit 5 configured to pump up, to the breeding space 2, filtrate water stored in the filtrate water storage space 4, and an aeration unit 6 configured to supply external air to the above-described breeding space.

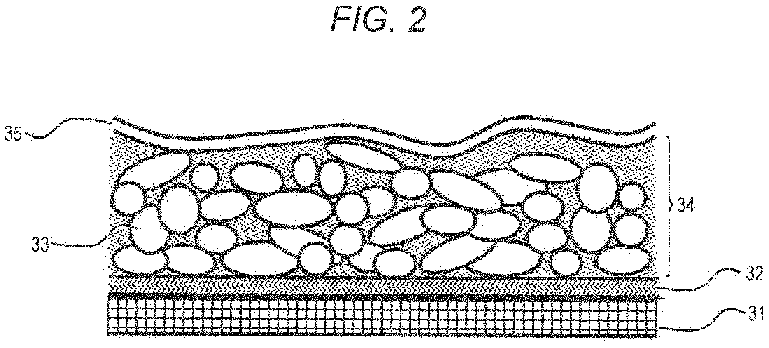

Fig. 2 is a sectional view of the biological filtration layer 3. The biological filtration layer 3 mainly includes a base portion and a useful purification bacterial group 34.

The base portion described herein is a structure for placing the useful purification bacterial group. The base portion needs to be configured such that water passes through the base portion and configured to have a carrier structure that is difficult for the useful purification bacterial group to flow out. In the present embodiment, the base portion includes, as illustrated in the figure, a metal punching plate 31 (a plate provided with many holes and exhibiting water conductivity), non-woven fabric 32, gravel 33, and the like.

The useful purification bacterial group 34 is mounted on the base portion to fill gaps among particles of the gravel 33. According to the invention, the useful purification bacterial group is a bacterial group in the form of activated sludge, the bacterial group containing a useful microbial group as the main component. The useful microbial group is manually or mechanically cultured and nurtured. For example, activated sludge used in sewage processing is equivalent to this useful purification bacterial group. Note that the useful purification bacterial group is in such a form that many useful microbial groups for performing water purification are aggregated and activated. Thus, properly, the useful purification bacterial group is referred to as an "activate bio flock." In the useful purification bacterial group 34, a variety of aerobic bacteria and anaerobic bacteria for performing water purification are grown. The amount of useful purification bacterial group 34 is set to about 3% in a capacity ratio with respect to a water amount.

The biological filtration layer 3 including the base portion and the useful purification bacterial group 34 exhibits low permeability (low water permeability). Thus, the flow of water is restricted. The useful purification bacterial group 34 exhibits a certain degree of permeation resistance. Note that for further increasing the permeation resistance, a layer 35 of fine particles may be provided on the useful purification bacterial group 34 or between the useful purification bacterial groups as illustrated in Fig. 2. For example, finely-crushed sand or finely-crushed coral sand can be used as the fine particles.

Note that the non-woven fabric 32 is used for the base portion because this prevents the useful purification bacterial group from dropping down. The gravel 33 is used because this produces an environment similar to a nature such as the bottom of a river. With this configuration, the useful purification bacterial group 34 is firmly fixed. As a result, functions of useful bacteria such as the anaerobic bacteria are enhanced. Specifically, the gravel 33 is for the purpose of producing a non-uniform in-plane velocity distribution of a water flow generated in the useful purification bacterial group 34 by the pump unit 5. That is, a portion with a low water flow velocity or a stagnated portion is locally produced particularly for improving the function of the anaerobic bacteria.

Moreover, the useful purification bacterial group is stacked on the gravel 33 such that an upper surface of the useful purification bacterial group forms a gently-rippling corrugated surface as in Fig. 2. The aerobic bacteria are grown at the upper surface of the useful purification bacterial group. Thus, such a growth surface area is expanded for increasing water purification efficiency. Moreover, generation of a turbulent flow due to water flow disturbance caused by the corrugated surface also contributes to an increase in the water purification efficiency.

The filtrate water storage space 4 is provided below the biological filtration layer 3. Water purified by the biological filtration layer 3 drops down to the filtrate water storage space 4, and then, is stored. The water stored in the filtrate water storage space 4 is pumped up to the breeding space 2 by the pump unit 5.

Note that the pump unit 5 may be a mechanical pump unit. Alternatively, the pump unit 5 may be a unit configured to generate a water flow in a certain direction by other methods. For example, the water flow may be generated by a temperature difference.

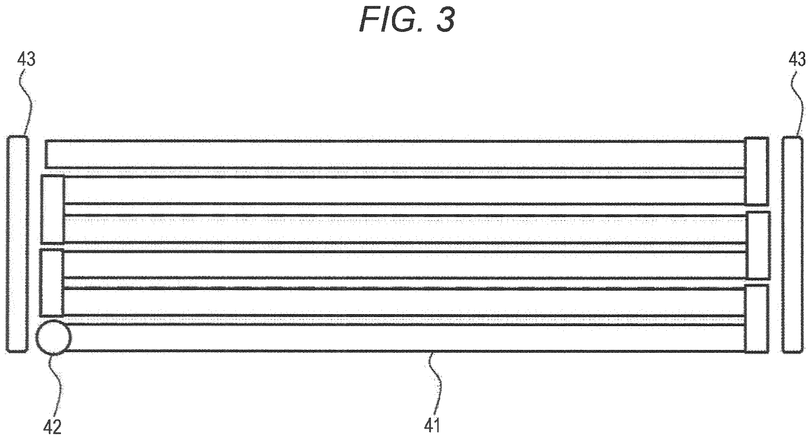

As necessary, a circulation path 41 as illustrated in Fig. 3 is provided in the filtrate water storage space 4. A plurality of connected pipes or a continuous cylindrical material forms the circulation path 41. Side surfaces of the pipes are provided with holes at certain intervals. Moreover, one end of the circulation path 41 is provided with a coupling port 42 communicating with the pump unit 5. In the figure, the circulation path 41 has linear portions between bends. Note that the circulation path 41 may be in a spiral shape, for example.

One reason for providing the circulation path 41 is that the water stored in the filtrate water storage space 4 is uniformly pumped up in a plane. The circulation path 41 also has a role as a buffering unit configured to prevent a water flow generated by strong suction force of the pump unit 5 from interfering with the stable biofiltration environment. The water is uniformly pumped up in the plane of the filtrate water storage space 4 so that the amount of water passing through the biological filtration layer 3 can be uniform across the plane regardless of the position of the pump unit 5. Another reason for providing the circulation path 41 will be described later.

Moreover, underwater lights 43 such as LEDs are provided in the filtrate water storage space 4, as necessary. A reason for providing the underwater lights 43 will also be described later. In the figure, the lights 43 are provided in the filtrate water storage space 4. Note that these lights 43 may be placed outside the filtrate water storage space 4.

Note that the pump unit 5 preferably has a mechanism configured to adjust a water pump-up rate (the amount of water pumped up per unit time). The adjustment mechanism may be a valve configured to adjust a conductance, or may be configured with a pump capacity variable by electric adjustment such as voltage or power adjustment. A preferable water pump-up rate by the pump unit 5 is, for example, such a rate that entire water in the water tank circulates within a range from about 10 minutes to about two hours. This rate is much faster than that of a typical purification device.

The aeration unit 6 is for the purpose of supplying the external air to the above-described breeding space to increase a dissolved oxygen concentration in the water. In the present embodiment, the aeration unit 6 is integrated with the pump unit 5. That is, a pipe provided at the pump unit 5 extends to the outside of the water tank body 1 such that the external air is guided into the pump unit 5 and that the air is supplied together with the pumped-up water. Meanwhile, the aeration unit 6 generates microbubbles 61. The microbubbles 61 can contain a large amount of air. Thus, the dissolved oxygen concentration can be increased to a normal limit value or more. Moreover, bacteria, bio-fouling, or cell membranes of microalgae harmful to the floating aquatic creatures are adsorbed to the microbubbles 61, and are destroyed by the impact generated upon bursting of the microbubbles. With this configuration, an environment well habitable for the aquatic creatures can be obtained.

### <Mechanism of Water Purification>

Next, the way to purify the water in this aquarium will be described.

Water purification includes the nitrification process of oxidizing harmful ammonia into relatively-safe nitrate salt by way of nitrous acid, and the denitrification process of reducing nitric acid to nitrogen using the anaerobic bacteria. The nitrification process is performed by the aerobic bacteria such as nitrifying bacteria or nitrous bacteria. Moreover, the denitrification process is performed by the anaerobic bacteria such as denitrifying bacteria. Note that the denitrifying bacteria are a generic term of nitrate-reducing bacteria having a capability of reducing nitrate salt to nitrogen. In fact, many bacteria are considered to perform denitrification.

The aerobic bacteria are grown in the vicinity of a surface of the biological filtration layer 3 with a high dissolved oxygen concentration, thereby performing the nitrification process. The dissolved oxygen concentration in the breeding space 2 is sufficiently increased by the aeration unit 6. A large amount of oxygen in this breeding space 2 is inevitably generated above the biological filtration layer 3 by a downward water flow generated by the suction force of the pump unit 5. This allows for a vigorous activity of the aerobic bacteria under favorable conditions. That is, the nitrification process is efficiently performed. When aeration is performed for generating the microbubbles 61, the dissolved oxygen concentration in the breeding space 2 is about 7 ppm which is an extremely-high concentration leading to sufficient activation of the aerobic bacteria. It is considered that the concentration in the vicinity of the surface of the biological filtration layer 3 is also similarly high.

Moreover, the upper surface of the useful purification bacterial group forms the gently-rippling corrugated surface as illustrated in Fig. 2, and as described above, the efficiency of the nitrification process can be further improved. In addition, the gently corrugated surface is also a cause for making a dissolved oxygen concentration gradient more likely to be generated as described later.

The biological filtration layer 3 exhibits low permeability. Thus, the dissolved oxygen concentration decreases as the depth from the surface of the useful purification bacterial group 34 is increased. That is, in the useful purification bacterial group 34, the dissolved oxygen concentration gradient becoming lower toward the filtrate water storage space 4 from the breeding space 2 is produced.

By nature, the anaerobic bacteria for performing denitrification have anaerobic respiration more easily at a low dissolved oxygen concentration. Thus, the denitrification process mainly progresses somewhere deeper in the useful purification bacterial group 34.

The denitrification process generally progresses slower than the nitrification process. Thus, it has been considered that the denitrification process is taken as bottleneck of an entire purification process. However, in the purification device of the present invention, the denitrification process progresses with an extremely-high efficiency as in the nitrification process. Reasons for such a high-efficiency process will be described below.

The first reason is that the useful purification bacterial group is not used in a floating state, but is used in a substantially fixed state and as the biological filtration layer 3 in which the bacterial group is fixed to a carrier such as the gravel 33. Purification is performed in this state, and therefore, the flow of water is gentle in a region where the anaerobic bacteria are grown. Thus, the active denitrification and multiplication occur. Note that by experiment, it has been confirmed that an activity of the anaerobic bacteria is accelerated in a stagnated water region of the above-described region even in a situation where the aerobic bacteria are activated. In Fig. 2, when a plate and the like as a shielding object with a certain size is provided among the particles of the gravel 33 to perform purification, air bubbles with a visible size are generated from the vicinity of such a small plate. That is, a large amount of nitrogen is generated by denitrification.

It has been described above that the water pump-up rate by the pump unit 5 is extremely higher than that of the typical purification device. Note that even when the pump unit 5 is operated at high rate such that the entire water in the water tank circulates in 10 minutes, the flow velocity in the useful purification bacterial group is several cm/min. This is an extremely-gentle flow as compared to the water flow generated in the breeding space. Thus, it can be said that as compared to the case of performing denitrification with the useful purification bacterial group in the floating state, the useful purification bacterial group in the fixed state on the carrier such as the gravel 33 is in a state of almost no flow velocity.

Note that the non-uniform in-plane velocity distribution of the water flow generated in the useful purification bacterial group 34 is, as described above, produced using the gravel 33 and the like. In this manner, the locally-stagnated region can be produced, and an activity of the anaerobic bacteria can be further accelerated.

The second reason is that the activity of the anaerobic bacteria for performing denitrification is made in the vicinity of a portion where the nitrification process is actively performed, and therefore, nitrite salt and nitrate salt are present in a relatively-high concentration under growth environment of the anaerobic bacteria. Thus, it is easy for the anaerobic bacteria to actively perform denitrification and to reproduce themselves.

Moreover, under the environment where nitrite salt and nitrate salt are present in a high concentration, there is a probability that the anaerobic bacteria perform anaerobic respiration even with a relatively-high dissolved oxygen concentration. When the water pump-up rate by the pump unit 5 is extremely increased, the dissolved oxygen concentration in the water of the filtrate water storage space 4 is equal to or higher than 3 ppm. That is, it is considered that the dissolved oxygen concentration is equal to or higher than 1 ppm even on a side closest to the filtrate water storage space 4 in the useful purification bacterial group 34. However, even in this case, it has been confirmed that denitrification is efficiently performed. Thus, there is a probability that in the useful purification bacterial group 34, the denitrification process is performed not only in a region with a low dissolved oxygen concentration, but also in a region with a relatively-high dissolved oxygen concentration. Because of that, the efficient denitrification is considered to be performed.

The third reason is that due to a circulating water flow generated in the useful purification bacterial group 34 by the pump unit 5, nitrite salt and nitrate salt generated in the vicinity of the surface of the useful purification bacterial group 34 by the aerobic bacteria flow toward an adjacent region where the anaerobic bacteria are grown. Thus, opportunities for the nitrite salt and the nitrate salt to contact the anaerobic bacteria are increased.

That is, the concentrations of the nitrite salt and the nitrate salt in the region where the anaerobic bacteria are grown in the useful purification bacterial group 34 are extremely high. The opportunities for the nitrite salt and the nitrate salt to contact the anaerobic bacteria are proportional to their concentrations, and therefore, the denitrification process progresses with high efficiency.

Moreover, as described in the second reason, the anaerobic bacteria easily reproduce themselves in the environment where the nitrite salt and the nitrate salt are present in high concentration. Thus, the anaerobic bacteria are grown in a high density. Consequently, the useful purification bacterial group 34 has the processing capacity of reducing, at high rate, the nitrite salt and the nitrate salt in high concentration.

As described above, the anaerobic bacteria growth region in the useful purification bacterial group 34 has a high denitrification capacity. Thus, it is considered that the nitrite salt and the nitrate salt generated in the vicinity of the surface of the adjacent useful purification bacterial group 34 flow into the anaerobic bacteria growth region, and therefore, the denitrification process progresses at extremely-high rate as compared to the typical case.

The fourth reason is that a dissolved oxygen concentration gradient is produced in the useful purification bacterial group as described above. Thus, each of multiple types of anaerobic bacteria grown in the useful purification bacterial group can move to a location with an optimal oxygen concentration, thereby performing purification. Thus, each of the multiple types of anaerobic bacteria can perform purification with the maximum denitrification efficiency. That is, the dissolved oxygen concentration gradient is purposefully produced in the useful purification bacterial group by the pump unit 5 according to the invention, and therefore, optimal growth environments can be provided to the various bacteria forming the useful purification bacterial group.

Note that the filtrate water storage space 4 can be utilized to further improve the denitrification capacity.

For example, facultative anaerobic bacteria such as photosynthetic bacteria are introduced to the filtrate water storage space 4. When the water pump-up rate by the pump unit 5 is not so high, the dissolved oxygen concentration is sufficiently low in the filtrate water storage space 4. Thus, an environment is provided, in which the facultative anaerobic bacteria such as the photosynthetic bacteria can easily make activities. In the case of the photosynthetic bacteria, energy is obtained by photosynthesis. Thus, the lights 43 are provided so that the activity can be made during day and night. Specifically, the inside of the circulation path 41 forms a long channel. Thus, when the activity of the anaerobic bacteria can be made in such a channel, efficient denitrification can be performed. Moreover, the function of the photosynthetic bacteria allows for degradation of organic water filth easily accumulated on the bottom of water and of sulfide generated from such filth, for example. When a material forming the circulation path can be a translucent material, light also reaches the inside of the circulation path 41. Thus, an environment more favorable to the photosynthetic bacteria is provided.

### <Verification Experiment>

Next, a verification experiment was conducted for checking whether or not favorable water purification is performed when fish and shellfish as aquatic creatures are bred in an aquarium of the present invention will be described.

Using a water tank with an inner volume of 150 liters, the aquarium illustrated in Fig. 1 was built. Then, 100 of Corbicula sandai, 150 of medium-sized (a body length of 4 cm to 7 cm) goldfish, and 700 of killifish were bred in the breeding space 2 filled with water. Breeding was started in such an overcrowded state that an extremely-large number of fish and shellfish are bred as compared to the size of the water tank. Note that at the time of starting the breeding, no useful purification bacterial group 34 was introduced. A water temperature was maintained at 15°C to 18°C during the experiment period. Each concentration of nitric acid, nitrous acid, and ammonia was measured every day. The pump-up rate by the pump unit 5 was set such that entire water in the water tank circulates in about 30 minutes.

The status of the aquarium at each day after the day of starting the breeding is shown in Table 1 below.

**[Table 1]**

| Breeding Day | Concentration (ppm) | | | Water Replacement | Comments, Notes |
|---|---|---|---|---|---|
| | NO3 | NO2 | Ammonia | | |
| 1st Day | 25 | 1 | - | - | Introduce Commercially-Available Nitrifying Bacteria |
| 2nd Day | 25 | 1 | - | - | |
| 3rd Day | 25 | 1 | - | - | |
| 4th Dav | 30 | 1 | - | - | |
| 5th Day | 100 | 5 | 3 | One Third | |
| 6th Day | 100 | 5 | 3 | One Third | |
| 7th Day | 100 | 5 | 1.5 | One Third | |
| 8th Day | 100 | 10 | 1.5 | One Third | |
| 9th Day | 100 | 10 | 0.25 | One Third | |
| 10th Day | 250 | 10 | 0.25 | One Third | |
| 11th Dav | 250 | 10 | 0 | One Third | |
| 12th Day | 250 | 10 | 0 | One Third | |
| 13th Day | 250 | 10 | 0 | One Third | |
| 14th Day | 250 | 10 | 0 | One Third | Introduce 5 L of ABF, and Cover Surface with Coral Sand |
| 15th Day | 250 | 10 | 0 | - | Introduce 12 g of Sugar |
| 16th Day | 250 | 10 | 0.15 | - | Introduce 5 L of ABF, Introduce 30 g of Sugar |
| 17th Day | 0 | 0 | 0.15 | - | Introduce 20 g of Sugar |
| 18th Day | 0 | 0 | 0 | - | Introduce 20 g of Sugar |
| 19th to 60th Days | 0 | 0 | 0 | - | Introduce 20 g of Sugar |

### (1st Day of Breeding)

For promptly starting up a biological nitrification cycle, nitrifying bacteria as commercially-available aerobic bacteria were introduced.

At this point, the ammonia concentration was still equal to or lower than the measurement limit. The concentrations of nitric acid and nitrous acid were also low. Water quality was good.

### (5th Day of Breeding)

Any of the concentrations of ammonia, nitric acid, and nitrous acid greatly increased. Specifically, the ammonia concentration increased to a concentration that might affect life and death of fish and shellfish. Thus, one third of the water in the water tank was replaced. Water replacement was performed every day until the 14th day at which a useful purification bacterial group (ABF) was introduced.

### (10th Day of Breeding)

The ammonia concentration began decreasing. Then, the nitric acid concentration greatly increased. Nitrifying bacteria multiplied. The start-up of the biological nitrification process was under way.

### (14th Day of Breeding)

From the 11th day, the ammonia concentration was equal to or lower than the measurement limit. The concentrations of nitric acid and nitrous acid were no longer changing. Thus, it was determined that the nitrifying bacteria are sufficiently cultivated, and therefore, the nitrification process has been started up. Then, 5 liters of the useful purification bacterial group 34 were introduced. The useful purification bacterial group 34 was fixed as a filler between the particles of the gravel 33 by the suction force of the pump unit 5. The top was covered with coral sand. Denitrification reaction tends to occur in alkaline. Thus, the coral sand for turning the water quality alkaline is a covering material suitable for water purification.

### (15th Day of Breeding)

As a nutritional source of the anaerobic bacteria, 12 g of sugar was introduced. However, the nitric acid concentration did not decrease.

### (16th Day of Breeding)

Furthermore, 5 liters of the useful purification bacterial group 34 were additionally introduced. In addition, 30 g of sugar was also introduced.

### (17th Day of Breeding)

The concentrations of nitric acid and nitrous acid reached equal to or lower than the measurement limit. Thus, it was confirmed that denitrification was in progress.

From this day, 20 g of sugar was introduced every day.

### (Days after 18th Day of Breeding)

At the 18th day, any of the concentrations of ammonia, nitric acid, and nitrous acid reached equal to or lower than the measurement limit. Thereafter, this state could be maintained.

As described above, even though the fish and the shellfish were bred in an extremely-high density impossible for a typical water tank, a purification function could be started up to achieve a stable state in a short period of mere 18 days. Thereafter, it was verified that extremely-favorable water quality can be maintained without water replacement over 40 days or more. The fish and the shellfish were grown healthily. Specifically, Corbicula sandai difficult to breed over a long period of time under artificial environment was also grown healthily.

This verification experiment was the first experiment using fish and shellfish. The experiment has been performed through trial and error regarding the start-up period for bacterial nitrification and the amount of sugar as a carbon supply source needed for the denitrification reaction of the anaerobic bacteria, for example. Nonetheless, a sufficiently-favorable result was obtained.

Note that in this verification experiment, the sugar was used as the carbon supply source for the anaerobic bacteria. However, other organic substances with biodegradability in water may be used. For example, biodegradable resin naturally dissolvable in water may be provided in the water tank 1, and may be used as the carbon supply source. This saves the task of providing the carbon supply source, leading to easy management. It is also effective to provide a biodegradable resin plate as a shielding plate in the biological filtration layer 3, and, at the same time, to make the biodegradable resin plate play a role in generation of a non-uniform water flow.

### Second Embodiment

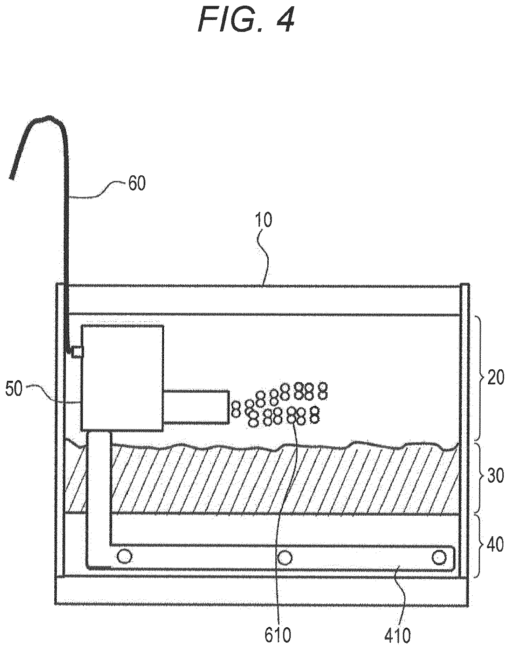

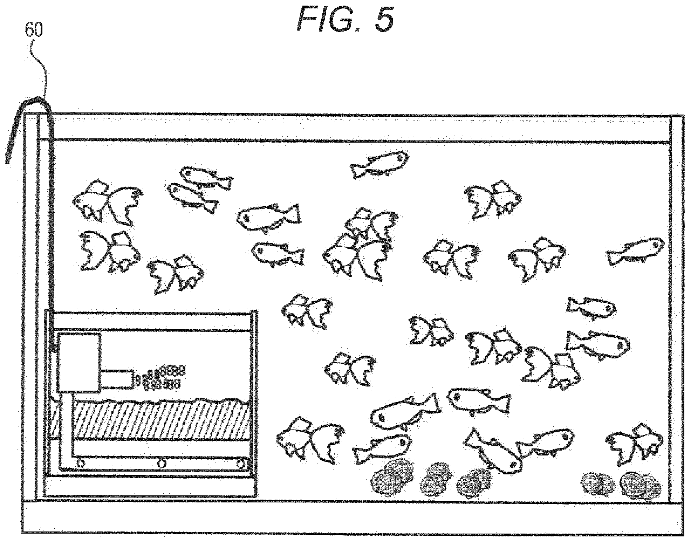

In the first embodiment, an aquarium including the purification device integrated with a water tank has been described. Note that the purification device can be used independently. In the present embodiment, a configuration and the like of such a purification device will be described with reference to Figs. 4 and 5.

Fig. 4 is a side view of the configuration of the purification device.

The purification device mainly includes a water tank 10 as a housing of the purification device, a replacement space 20 provided at an opening of the water tank 10 and formed as a space for water replacement from the outside, a low-water-permeable biological filtration layer 30 coupled to the replacement space 20, a filtrate water storage space 40 coupled to the biological filtration layer 30, a pump unit 50 configured to pump up, to the replacement space 20, filtrate water stored in the filtrate water storage space 40, and an aeration unit 60 configured to supply external air to the above-described breeding space.

Each section forming the purification device has a configuration similar to that of the aquarium described in the first embodiment. The water tank 10 as the housing of the purification device corresponds to the water tank 1, the replacement space 20 corresponds to the breeding space 2, the biological filtration layer 30 corresponds to the biological filtration layer 3, the filtrate water storage space 40 corresponds to the filtrate water storage space 4, the pump unit 50 corresponds to the pump unit 5, and the aeration unit 60 corresponds to the aeration unit 6. These components each have similar configuration and function to those of a corresponding component.

Note that the replacement space 20 does not need a large space for breeding aquatic creatures as long as the connection function of allowing for water replacement between the water systems for performing purification is satisfied. Thus, the replacement space 20 may be a smaller space than the breeding space 2.

The purification device of the present embodiment is configured to purify water by a mechanism similar to the purification mechanism described in the first embodiment. Then, in the replacement space 20, the purified water is replaced with non-purified water from the outside.

Fig. 5 illustrates a use example of the purification device of the second embodiment.

The purification device is installed such that the purification device is placed in the water tank in which the aquatic creatures are grown and the aeration unit 60 is taken out to be placed outside. Note that in the case of a great water depth of the installation, the aeration unit 60 might need pumping by an air pump.

Since the purification device can be easily installed in the water tank as described above, a purification mechanism can be easily provided at an existing water tank.

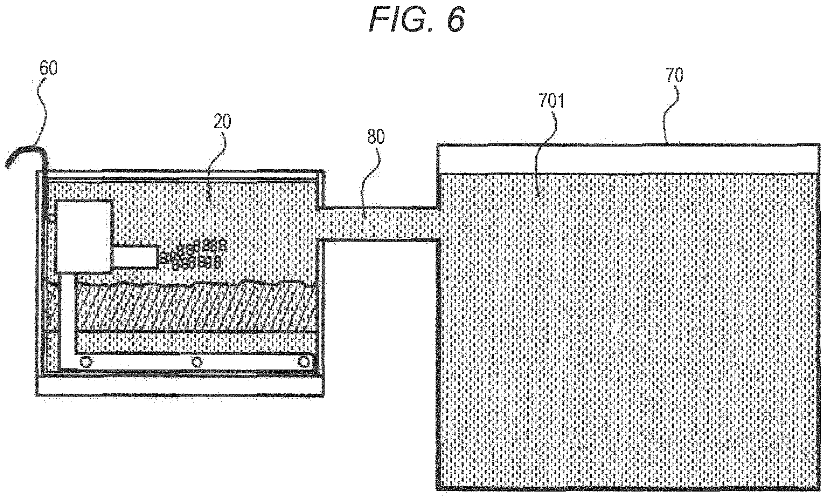

Fig. 6 illustrates another use example of the purification device of the second embodiment.

A water tank 70 in which the aquatic creatures are grown and the purification device are connected together through a connection unit 80 such as a pipe. Non-purified water 701 in the water tank 70 is, by the connection unit 80, replaced with the water in the replacement space 20 of the purification device. As described above, the purification target water 701 in the water tank 70 is sequentially purified.

Note that the use examples of the purification device illustrated in Figs. 5 and 6 are not limited to the water in the water tank in which the aquatic creatures are grown. This purification device is applicable to purification of water in various water systems such as ponds, lakes, or reservoirs.

In a case where the water in the water system has a sufficient dissolved oxygen amount, the aeration unit 60 is not necessarily provided. On the other hand, in a case where aerobic bacteria in the purification device do not sufficiently function only with dissolved oxygen introduced from the water system, the aeration unit 60 configured to directly supply air into the purification device is needed as illustrated in Figs. 5 and 6.

### Third Embodiment

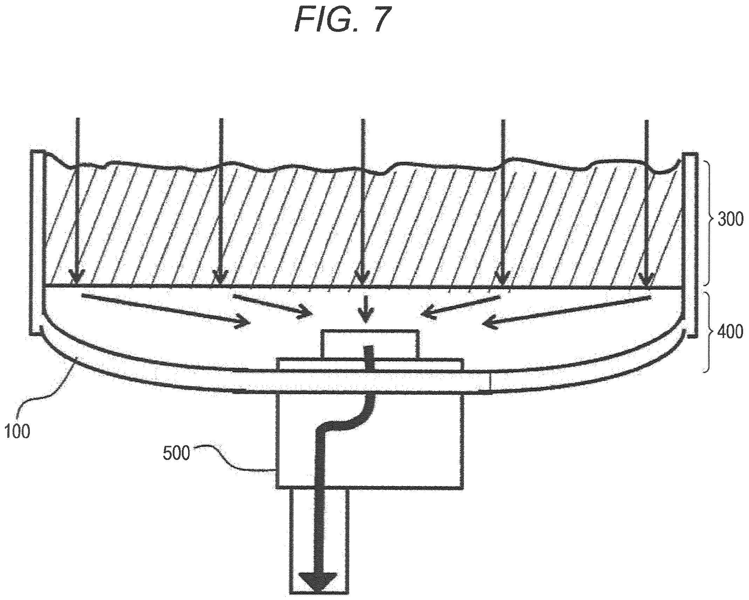

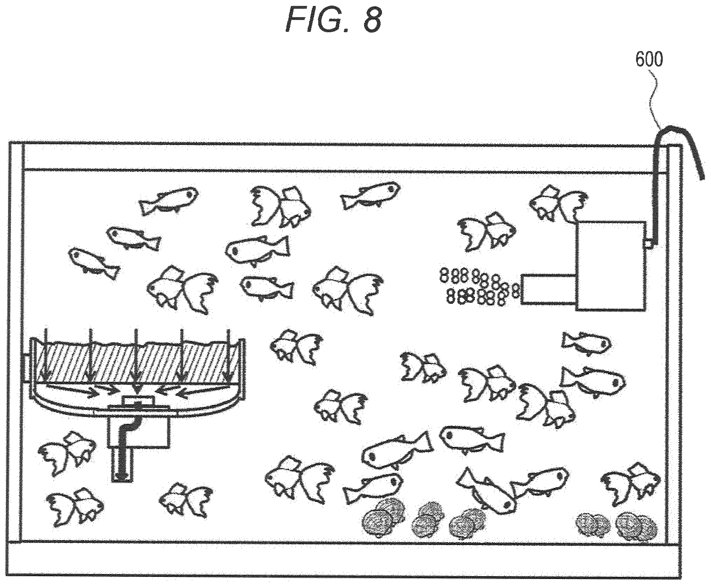

In the second embodiment, the examples where the purification device is used independently have been described. In the above-described purification device, the water from the outside enters the replacement space 20, and then, is purified. Thereafter, the purified water returns to the replacement space 20, and then, flows to the outside. On the other hand, in a purification device of the present embodiment, purified water flows to the outside without returning. That is, a flow of water is generated in one direction in the purification device. A configuration and the like of this purification device will be described with reference to Figs. 7 and 8.

Fig. 7 is a side view of the configuration of the purification device.

The purification device includes a water tank 100 as a housing of the purification device, a low-water-permeable biological filtration layer 300, a drainage space 400 coupled to the biological filtration layer 300, and a pump unit 500 configured to pump up filtrate water from the drainage space 400 to the outside of the purification device.

In Fig. 7, water flowing out from an upper portion of the purification device is, as described above, filtrated by passing through the biological filtration layer 300 by the pump unit 500. After filtration, the water is pumped up from the drainage space 400 to the outside by the pump unit 500.

In this configuration, conditions allowing for high-efficient purification bacteria activities are, as in the first or second embodiment, met in the biological filtration layer 300. Thus, efficient water purification is performed.

Fig. 8 illustrates a use example of the purification device of the third embodiment.

The purification device is fixed to an inner side wall of the water tank in which aquatic creatures are grown. An aeration unit 600 is separately provided such that a dissolved oxygen concentration in the water tank reaches a proper concentration. The water is purified when downwardly passing through the purification device. The water in the water tank is continuously purified, and therefore, cyclical purification is performed.

As described above, the purification device can be easily installed in the water tank. Thus, a mechanism can be easily provided at an existing water tank.

In the first to third embodiments, the purification device or the aquarium provided integrally with the purification device has been described above.

In a basic configuration of the purification device, the low-water-permeable biological filtration layer configured to purify water and the pump unit configured to generate the water flow in the biological filtration layer are provided. The above-described biological filtration layer includes the useful purification bacterial group in which the bacteria for performing purification are grown. This useful purification bacterial group is fixed in a bulk state. Fixing in the bulk state as described herein does not always mean that the useful purification bacterial group is firmly fixed. The bulk state fixing means that floating of the useful purification bacterial group is suppressed and the useful purification bacterial group is stably fixed to the base portion.

In the above-described embodiments, the useful purification bacterial group is provided on the base portion for fixing the useful purification bacterial group in the bulk state. The water flow generated by the pump unit is converted into a flow from the useful purification bacterial group toward the base portion, and therefore, the useful purification bacterial group can be firmly fixed to the base portion.

Note that the method for fixing the useful purification bacterial group is not limited to the above-described configuration. For example, the useful purification bacterial group may be packed into, e.g., a box made of a fine mesh material through which water can be transmitted.

### <Discussion and Summary of the Present Invention>

The present invention has been conceived in light of the mechanism for purifying water at a river.

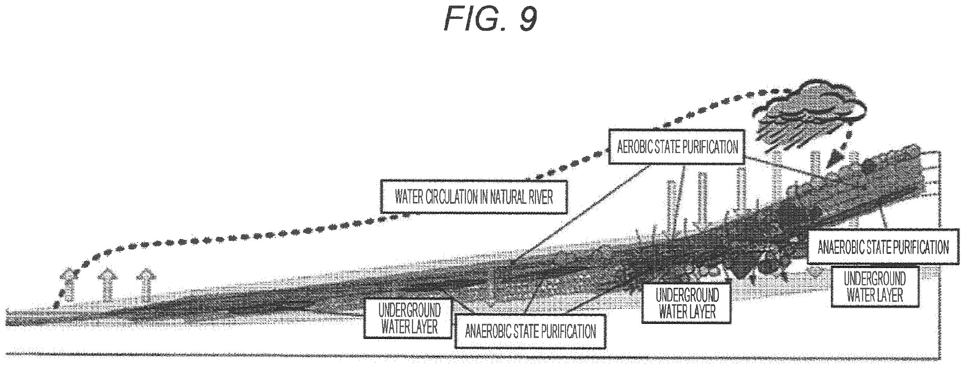

Fig. 9 is a reference diagram of a concept regarding water circulation in a river. When water enters from the bottom of the river to an underground water layer, the water flowing in the river is purified at the bottom of the river in such a manner that aerobic state purification and anaerobic state purification are continuously performed. The purified water springs from the underground water layer to the surface of the ground, and is poured into the sea. Then, such water is evaporated making cloud, and is showered as rain onto mountains and rivers. In this manner, the water returns to a river. In the present invention, such a spectacular natural purification system is embodied as a compact purification device having a cycle filtration function.

It is considered that the power of nature is utilized to the maximum extent as described above, and therefore, a higher purification capacity than ever can be exhibited. That is, the fixed useful purification bacterial group (ABF) including the activated purification microbial groups is used as the filtration layer. The water is circulated through the filtration layer so that high-efficient purification can be performed. Various useful bacteria are present in the useful purification bacterial group. Potentials of these bacteria are developed as much as possible so that the bacteria can contribute to purification. Thus, a high purification capacity can be exhibited despite its simple configuration.

Various characteristics of the present invention will be summarized below.

The useful purification bacterial group includes various types of useful bacteria. This bacterial group exhibits a high purification capacity, and therefore, has been broadly used for water purification at a sewage plant and the like. However, it is difficult to develop and use the potentials of various useful bacteria for higher-efficient purification.

The present invention focuses on the following points: the natural purification capacity of the useful purification bacteria at rivers is extremely high; therefore, a state in which the water quality suitable for drinking is constantly maintained is created despite a large amount of organic substance flowing into mountain streams and the like; and such natural biological purification is brought by a state in which the water passes through a gravel layer and the like stacked on the bottom of the river. This provides the idea of using, as a biological filtration layer, the useful purification bacterial group in a substantially fixed state.

In the state in which the useful purification bacterial group is fixed, the flow of water flowing in the useful purification bacterial group is extremely gentle. Thus, higher capacities of various useful bacteria can be developed.

The optimal environment varies among the purification bacteria. Thus, various types of environment such as the bottom of a river are produced so that the purification and breeding capacities of each bacterium can be enhanced. From this point of view, a configuration is achieved, in which spaces with different levels of water permeability are purposefully produced in the useful purification bacterial group, and therefore, a dissolved oxygen concentration gradient is produced. The dissolved oxygen concentration is an important factor for determining the efficiency of any of aerobic respiration and anaerobic respiration performed by the purification bacteria.

Furthermore, a configuration is employed, in which a non-uniform in-plane velocity distribution of the water flow generated in the biological filtration layer is produced due to the used gravel particles and the like with different particle sizes. With this configuration, it is intended to produce various types of water flow environment such as the bottom of a river.

As described above, a broad range of environment options is provided to many useful bacteria forming the useful purification bacterial group. Thus, the capacities of the useful bacteria are sufficiently developed so that an extremely-high-efficient biological purification device can be built.

Moreover, high-rate water circulation can be performed by the pump unit, and therefore, high-efficient purification processing can be achieved.

Water circulation by the pump unit contributes to production of a dissolved oxygen concentration gradient according to the invention, as described above. In addition, the pump unit also plays a role to cause the nitrate salt and the nitrite salt generated in the nitrification process by aerobic bacteria to flow toward the adjacent region where anaerobic bacteria are grown. This increases the concentrations of the nitrate salt and the nitrite salt in the region where the anaerobic bacteria are grown. Thus, the opportunity to contact the nitrate salt and the nitrite salt with the anaerobic bacteria increases, and therefore,

the efficiency of the denitrification process can be increased. Moreover, the concentrations of the nitrate salt and the nitrite salt increase in the region where the anaerobic bacteria are grown, and therefore, active multiplication of the anaerobic bacteria occurs. Furthermore, reduction is performed by the anaerobic bacteria immediately after the harmful nitrate salt and nitrite salt are produced, and therefore, these salts can be converted into the safe nitrogen. Thus, harm to the aquatic creatures can be reduced.

In addition, a continuous aeration unit may be provided so that the function of the aerobic bacteria can be accelerated. Specifically, the water flow from the breeding space toward the useful purification bacterial group is generated. Thus, oxygen is efficiently supplied to the region where the aerobic bacteria are grown. Using the microbubbles, the dissolved oxygen concentration can be further increased. Alternatively, the effect of destroying and killing floating cell membranes of viable bacteria and microalgae harmful to the aquatic creatures and the purification bacteria is obtained.

Moreover, using a filtrate water storage space as a region where the dissolved oxygen concentration is low, facultative anaerobic bacteria such as photosynthetic bacteria can be utilized. In this manner, the denitrification effect can be further increased, and sulfide processing can be performed.

A circulation path is provided in the filtrate water storage space so that the water can be circulated across the entirety of the biological filtration layer while the water flow is being moderately adjusted. Thus, water purification can be performed using the capacities of all bacteria of the useful purification bacterial group. The photosynthetic bacteria and the like play an active role in the long channel in the circulation path, leading to more efficient purification.

As described above, the nature of the useful purification bacterial group in which various purification bacteria are present adjacent to each other is utilized, and the environment such as the dissolved oxygen concentration and the water flow is diversified. Thus, the potentials of various purification bacteria can be developed to the maximum extent. This allows for extremely-high-efficient purification in the useful purification bacterial group. Thus, even when water circulation is performed at a rate much higher than that of the typical case, water purification can be performed only by the function of the useful purification bacteria. Thus, the amount of water that can be purified in a unit time can be significantly increased.

### Fourth Embodiment

As described above, the present invention has been conceived in light of the mechanism for purifying water at a natural river. However, purification action might be lost even at the natural river. For example, the natural river is artificially reconstructed, and therefore, the natural purification action might be impaired. Alternatively, at a river flowing through an urban area, contamination might be accelerated due to eutrophication and inflow of organic substances beyond the natural purification process. Furthermore, the nitrification process might no longer function due to, e.g., a decrease in the dissolved oxygen concentration.

In the present embodiment, a purification device for enhancing such a river purification capacity will be described. This purification device can be used not only at rivers, but also at water systems with water flows, such as an artificial water channel.

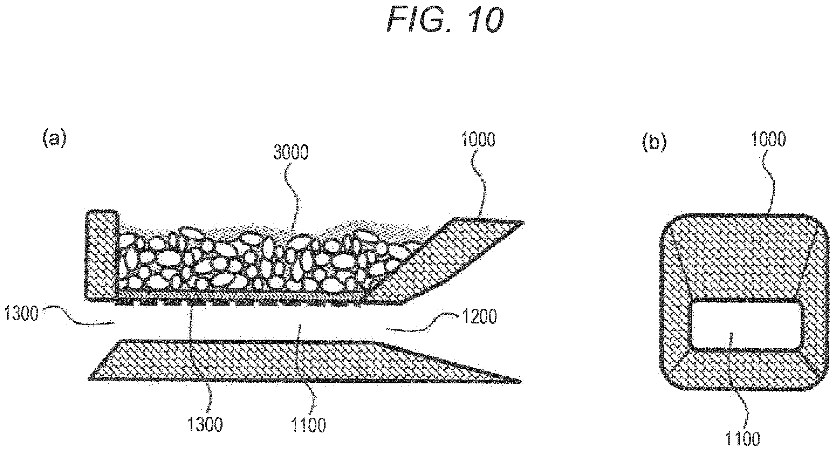

Fig. 10(a) is a vertical sectional view of a configuration of the purification device.

The purification device includes a water channel block 1000 and a low-water-permeable biological filtration layer 3000 provided on the water channel block. The biological filtration layer 3000 is a filtration layer similar to the biological filtration layers illustrated in the first to third embodiments.

A water channel 1100 penetrates the water channel block. One end of the water channel 1100 is an inlet port 1200. Moreover, the other end of the water channel 1100 is an outlet port 1300. Fig. 10(b) is a front view of the purification device from a side of the inlet port 1200.

An opening of the inlet port 1200 has desirably an area larger than that of the water channel 1100, and has desirably such a shape that the opening area is gradually narrowed toward the water channel 1100.

An upper inner wall portion 1300 of the water channel 1100 is, for example, provided with fine holes, and therefore, exhibits water permeability.

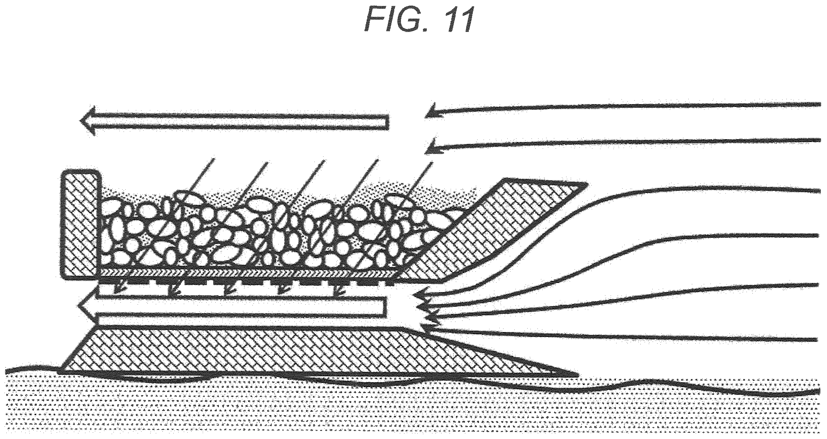

Fig. 11 illustrates a use example of the purification device of the present embodiment.

The purification device is placed on the bottom of a water system with a water flow, such as a riverbed. In Fig. 11, water flows from right to left.

The opening of the inlet port 1200 has the area larger than that of the water channel 1100. Thus, as illustrated in Fig. 11, the water flow converges to the water channel 1100. The flow velocity of the water flow in the water channel 1100 becomes faster as compared to the normal velocity of a water system. Thus, in the biological filtration layer 3000, a water flow from the upper portion to the water channel 1100 is generated. That is, in this configuration, conditions allowing for high-efficient purification bacteria activities are, as in the first to third embodiments, also met in the biological filtration layer 300. Thus, efficient water purification is performed.

As described above, in the present embodiment, the water flow generated in the water system converges to the water channel 1100. Thus, the water flow in the biological filtration layer can be produced by the pump unit as in the first to third embodiments.

Note that the purification devices of the present embodiment are arranged in parallel in a width direction of the water system or arranged in series in the flow direction so that the purification capacity can be further enhanced.

Note that in the biological filtration layer 3000, the useful purification bacterial group in which the bacteria for performing purification are grown functions in a fixed bulk state. Furthermore, in the case of using a sand layer and the like to form the biological filtration layer 3000, the biological filtration layer 3000 may serve as a planting pot suitable for aquatic plants having a water quality purification capacity. Moreover, a space suitable for growth of freshwater bivalve, such as freshwater clams, having a purification capacity can be obtained. These purification capacities of the aquatic plants or the bivalve are added so that more efficient natural purification can be performed. Such a space can also be utilized as a space suitable for aquaculture of freshwater clams.

Furthermore, in description above, it is assumed that the water channel block is placed in a river with the natural water flow. Note that in the case of rivers with a small water flow or stagnant rivers, a device configured to artificially generate a water flow is added to the opening so that an equivalent function can be provided.

The installation location of the purification device is not limited to the bottom of the water system, and can be a side wall of the water system, for example. That is, this purification device can be placed at any location with a water flow.

### DESCRIPTION OF REFERENCE SIGNS

- 1: water tank
- 2: breeding space
- 3: biological filtration layer
- 4: filtrate water storage space
- 5: pump unit
- 6: aeration unit
- 41: circulation path
- 61: microbubble
- 10: purification device
- 20: replacement space
- 30: biological filtration layer
- 40: filtrate water storage space
- 50: pump unit
- 60: aeration unit
- 410: circulation path
- 610: microbubble
- 1000: water channel block
- 1100: water channel
- 1200: inlet port
- 3000: biological filtration layer

## Claims

1. A water purification device using a bacterium, comprising:
a low-water-permeable biological filtration layer (3, 30, 300, 3000) configured to purify water; and
a pump unit (5, 50, 500) configured to generate a water flow in the biological filtration layer (3, 30, 300, 3000), wherein
the biological filtration layer (3, 30, 300, 3000) includes a useful purification bacterial group (34) having grown aerobic bacteria and anaerobic bacteria for performing purification in the form of activated sludge, and
the useful purification bacterial group (34) is fixed in a bulk state and there exists a dissolved oxygen concentration gradient produced by the pump unit (5, 50, 500) during use in the useful purification bacterial group.

2. The purification device according to claim 1, wherein
the biological filtration layer (3, 30, 300, 3000) includes a base portion (32) and the useful purification bacterial group (34) provided on the base portion (32), and
the water flow generated by the pump unit (5, 50, 500) is a flow from the useful purification bacterial group (34) to the base portion (32).

3. The purification device according to claim 1 or 2, comprising:
a replacement space (20) in which water replacement is performed from an outside; and
a filtrate water storage space (4, 40), wherein
the replacement space (20) is coupled to the biological filtration layer (3, 30, 300, 3000),
the filtrate water storage space (4, 40) is coupled to the biological filtration layer (3, 30, 300, 3000), and
the pump unit (5, 50, 500) pumps up, to the replacement space (20), filtrate water stored in the filtrate water storage space (4, 40).

4. The purification device according to claim 3, further comprising
an aeration unit (6, 60, 600) configured to supply external air to the replacement space (20).

5. The purification device according to any one of claims 1 to 4, wherein
the biological filtration layer (3, 30, 300, 3000) has a mechanism (33) configured to produce a non-uniform in-plane velocity distribution of the water flow generated in the biological filtration layer (3, 30, 300, 3000) by the pump unit (5).

6. The purification device according to any one of claims 1 to 5, wherein
a fine particle (35) for decreasing a water permeation rate of the useful purification bacterial group (34) is mixed.

7. The purification device according to claim 3 and any one of claims 4 to 6 when referring back to claim 3, comprising:
a light source (43) provided in the filtrate water storage space (4, 40); and
a photosynthetic bacterium grown by the light source (43).

8. The purification device according to claim 4, wherein
the aeration unit (6, 60, 600) is integrated with the pump unit (5).

9. The purification device according to claim 8, wherein
the pump unit (5) has a function of generating a microbubble (61, 610).

10. The purification device according to claim 3, wherein
the filtrate water storage space (4, 40) has a circulation path mechanism (41, 410) configured to produce uniform pump-up efficiency across a plane.

11. An aquarium comprising:
the purification device according claim 3, the purification device being integrated with a water tank (1, 10, 70, 100), wherein
the replacement space (20) is a breeding region (2) for an aquatic creature at an upper portion of the water tank (1, 10, 70, 100).

12. A water purification device using a bacterium to purify a water system with a water flow, comprising:
a water channel block (1000); and
a low-water-permeable biological filtration layer (3000) provided above the water channel block (1000) and configured to purify water, wherein
the water channel block (1000) has a penetrating water channel (1100),
an opening of an inlet port (1200) of the water channel (1100) has an area larger than that of a water channel section,
an upper inner wall portion (1300) of the water channel (1100) exhibits water permeability between the upper inner wall portion (1300) and the biological filtration layer (3000),
the biological filtration layer (3000) includes a useful purification bacterial group (34) having grown aerobic bacteria and anaerobic bacteria for performing purification in the form of activated sludge, and
the useful purification bacterial group (34) is fixed in a bulk state, and there exists a dissolved oxygen concentration gradient in the useful purification bacterial
group when the water flow in the water system converges to the water channel (1100).

13. The purification device according to claim 12, wherein
the biological filtration layer (3000) includes a sand layer.

## Patentansprüche

1. Eine Wasserreinigungsvorrichtung, die ein Bakterium verwendet, wobei die Wasserreinigungsvorrichtung folgende Merkmale aufweist:
eine biologische Filtrationsschicht (3, 30, 300, 3000) mit geringer Wasserdurchlässigkeit, die dazu ausgebildet ist, Wasser zu reinigen; und
eine Pumpeneinheit (5, 50, 500), die dazu ausgebildet ist, einen Wasserfluss in der biologischen Filtrationsschicht (3, 30, 300, 3000) zu erzeugen, wobei
die biologische Filtrationsschicht (3, 30, 300, 3000) eine nützliche Reinigungsbakteriengruppe (34) umfasst, die gezüchtete aerobe Bakterien und anaerobe Bakterien zur Durchführung einer Reinigung in Form von Belebtschlamm aufweist, und
die nützliche Reinigungsbakteriengruppe (34) in einem Sammelzustand befestigt ist und ein Konzentrationsgefälle des gelösten Sauerstoffs besteht, das durch die Pumpeneinheit (5, 50, 500) während der Verwendung in der nützlichen Reinigungsbakteriengruppe erzeugt wird.

2. Die Reinigungsvorrichtung gemäß Anspruch 1, bei der
die biologische Filtrationsschicht (3, 30, 300, 3000) einen Basisabschnitt (32) und die nützliche Reinigungsbakteriengruppe (34) umfasst, die auf dem Basisabschnitt (32) vorgesehen ist, und
der von der Pumpeneinheit (5, 50, 500) erzeugte Wasserfluss ein Fluss von der nützlichen Reinigungsbakteriengruppe (34) zu dem Basisabschnitt (32) ist.

3. Die Reinigungsvorrichtung gemäß Anspruch 1 oder 2, die folgende Merkmale aufweist:
einen Austauschraum (20), in dem ein Wasseraustausch von außen durchgeführt wird; und
einen Filtratwasser-Speicherraum (4, 40), wobei
der Austauschraum (20) mit der biologischen Filtrationsschicht (3, 30, 300, 3000) verbunden ist,
der Filtratwasser-Speicherraum (4, 40) mit der biologischen Filtrationsschicht (3, 30, 300, 3000) verbunden ist, und
die Pumpeneinheit (5, 50, 500) Filtratwasser, das in dem Filtratwasser-Speicherraum (4, 40) gespeichert ist, zu dem Austauschraum (20) hochpumpt.

4. Die Reinigungsvorrichtung gemäß Anspruch 3, die ferner folgende Merkmale aufweist:
eine Belüftungseinheit (6, 60, 600), die dazu ausgebildet ist, dem Austauschraum (20) Außenluft zuzuführen.

5. Die Reinigungsvorrichtung gemäß einem der Ansprüche 1 bis 4, bei der
die biologische Filtrationsschicht (3, 30, 300, 3000) einen Mechanismus (33) aufweist, der dazu ausgebildet ist, eine ungleichmäßige planare Geschwindigkeitsverteilung des Wasserflusses, der durch die Pumpeneinheit (5) in der biologischen Filtrationsschicht (3, 30, 300, 3000) erzeugt wird, herzustellen.

6. Die Reinigungsvorrichtung gemäß einem der Ansprüche 1 bis 5, bei der
ein Feinpartikel (35) zur Verringerung der Wasserdurchlässigkeitsrate der nützlichen Reinigungsbakteriengruppe (34) beigemischt wird.

7. Die Reinigungsvorrichtung gemäß Anspruch 2 und gemäß einem der Ansprüche 4 bis 6, in Rückbezug auf Anspruch 3, die folgende Merkmale aufweist:
eine Lichtquelle (43), die in dem Filtratwasser-Speicherraum (4, 40) vorgesehen ist; und
ein fotosynthetisches Bakterium, das durch die Lichtquelle (43) wächst.

8. Die Reinigungsvorrichtung gemäß Anspruch 4, bei der
die Belüftungseinheit (6, 60, 600) mit der Pumpeneinheit (5) integriert ist.

9. Die Reinigungsvorrichtung gemäß Anspruch 8, bei der
die Pumpeneinheit (5) eine Funktion zur Erzeugung einer Mikroblase (61, 610) aufweist.

10. Die Reinigungsvorrichtung gemäß Anspruch 3, bei der
der Filtratwasser-Speicherraum (4, 40) einen Mechanismus für einen Zirkulationsweg (41, 410) aufweist, der dazu ausgebildet ist, eine gleichmäßige Hochpumpleistung in einer Ebene zu erzeugen.

11. Ein Aquarium, das folgende Merkmale aufweist:
die Reinigungsvorrichtung gemäß Anspruch 3, wobei die Reinigungsvorrichtung mit einem Wassertank (1, 10, 70, 100) integriert ist, wobei
der Austauschraum (20) ein Zuchtbereich (2) für ein Wasserlebewesen in einem oberen Abschnitt des Wassertanks (1, 10, 70, 100) ist.

12. Eine Wasserreinigungsvorrichtung, die ein Bakterium verwendet, um ein Wassersystem mit einem Wasserfluss zu reinigen, die folgende Merkmale aufweist:
einen Wasserkanalblock (1000); und
eine biologische Filtrationsschicht (3000) mit geringer Wasserdurchlässigkeit, die oberhalb des Wasserkanalblocks (1000) vorgesehen ist und dazu ausgebildet ist, Wasser zu reinigen, wobei
der Wasserkanalblock (1000) einen durchdringenden Wasserkanal (1100) aufweist, eine Öffnung eines Einlasses (1200) des Wasserkanals (1100) eine Fläche aufweist, die größer als die eines Wasserkanalabschnitts ist,
ein oberer innerer Wandabschnitt (1300) des Wasserkanals (1100) eine Wasserdurchlässigkeit zwischen dem oberen inneren Wandabschnitt (1300) und der biologischen Filtrationsschicht (3000) aufweist,
die biologische Filtrationsschicht (3000) eine nützliche Reinigungsbakteriengruppe (34) umfasst, die aerobe Bakterien und anaerobe Bakterien zur Durchführung einer Reinigung in Form von Belebtschlamm gewachsen sind, und
die nützliche Reinigungsbakteriengruppe (34) in einem Sammelzustand befestigt ist und ein Konzentrationsgefälle des gelösten Sauerstoffs in der nützlichen Reinigungsbakteriengruppe besteht, wenn der Wasserfluss in dem Wassersystem in den Wasserkanal (1100) konvergiert.

13. Die Reinigungsvorrichtung gemäß Anspruch 12, bei der die biologische Filtrationsschicht (3000) eine Sandschicht umfasst.

## Revendications

1. Dispositif de purification d'eau utilisant une bactérie, comprenant:
une couche de filtration biologique à faible perméabilité à l'eau (3, 30, 300, 3000) configurée pour purifier l'eau; et
une unité de pompage (5, 50, 500) configurée pour générer un flux d'eau dans la couche de filtration biologique (3, 30, 300, 3000),
dans lequel
la couche de filtration biologique (3, 30, 300, 3000) comporte un groupe bactérien de purification utile (34) présentant des bactéries aérobies et des bactéries anaérobies cultivées pour effectuer la purification sous forme de boue activée, et
le groupe bactérien de purification utile (34) est fixé à l'état en vrac et il existe un gradient de concentration en oxygène dissous produit par l'unité de pompage (5, 50, 500) lors de l'utilisation dans le groupe bactérien de purification utile.

2. Dispositif de purification selon la revendication 1, dans lequel
la couche de filtration biologique (3, 30, 300, 3000) comporte une partie de base (32) et le groupe bactérien de purification utile (34) prévu sur la partie de base (32), et
le flux d'eau généré par l'unité de pompage (5, 50, 500) est un flux du groupe bactérien utile d'épuration (34) vers la partie de base (32).

3. Dispositif de purification selon la revendication 1 ou 2, comprenant:
un espace de remplacement (20) dans lequel le remplacement de l'eau est effectué depuis l'extérieur; et
un espace de stockage d'eau filtrée (4, 40),
dans lequel
l'espace de remplacement (20) est couplé à la couche de filtration biologique (3, 30, 300, 3000),
l'espace de stockage d'eau de filtration (4, 40) est couplé à la couche de filtration biologique (3, 30, 300, 3000), et
l'unité de pompage (5, 50, 500) pompe, vers l'espace de remplacement (20), l'eau de filtration stockée dans l'espace de stockage d'eau de filtration (4, 40).

4. Dispositif de purification selon la revendication 3, comprenant par ailleurs
une unité d'aération (6, 60, 600) configurée pour alimenter de l'air extérieur vers l'espace de remplacement (20).

5. Dispositif de purification selon l'une quelconque des revendications 1 à 4, dans lequel
la couche de filtration biologique (3, 30, 300, 3000) présente un mécanisme (33) configuré pour produire une distribution de vitesse dans le plan non uniforme du flux d'eau généré dans la couche de filtration biologique (3, 30, 300, 3000) par l'unité de pompage (5).

6. Dispositif de purification selon l'une quelconque des revendications 1 à 5, dans lequel
est mélangée une fine particule (35) pour diminuer un taux de perméabilité à l'eau du groupe bactérien de purification utile (34).

7. Dispositif de purification selon la revendication 3 et l'une quelconque des revendications 4 à 6 lorsqu'elle se réfère à la revendication 3, comprenant:
une source de lumière (43) prévue dans l'espace de stockage d'eau de filtration (4, 40); et
une bactérie photosynthétique cultivée par la source lumineuse (43).

8. Dispositif de purification selon la revendication 4, dans lequel l'unité d'aération (6, 60, 600) est intégrée dans l'unité de pompage (5).

9. Dispositif de purification selon la revendication 8, dans lequel le groupe de pompage (5) a pour fonction de générer une microbulle (61, 610).

10. Dispositif de purification selon la revendication 3, dans lequel
l'espace de stockage d'eau de filtration (4, 40) présente un mécanisme de trajet de circulation (41, 410) configuré pour produire une efficacité de pompage uniforme sur un plan.

11. Aquarium comprenant:
le dispositif de purification selon la revendication 3, le dispositif de purification étant intégré dans un réservoir d'eau (1, 10, 70, 100),
dans lequel
l'espace de remplacement (20) est une zone de reproduction (2) pour une créature aquatique au niveau d'une partie supérieure du réservoir d'eau (1, 10, 70, 100).

12. Dispositif de purification d'eau utilisant une bactérie pour purifier un système d'eau avec un flux d'eau, comprenant:
un bloc de canal d'eau (1000); et
une couche de filtration biologique à faible perméabilité à l'eau (3000) prévue au-dessus du bloc de canal d'eau (1000) et configurée pour purifier l'eau,
dans lequel
le bloc de canal d'eau (1000) présente un canal d'eau pénétrant (1100),
une ouverture d'un orifice d'entrée (1200) du canal d'eau (1100) présente une surface plus grande que celle d'un segment de canal d'eau,
une partie de paroi intérieure supérieure (1300) du canal d'eau (1100) présente une perméabilité à l'eau entre la partie de paroi intérieure supérieure (1300) et la couche de filtration biologique (3000),
la couche de filtration biologique (3000) comporte un groupe bactérien de purification utile (34) présentant des bactéries aérobies et des bactéries anaérobies cultivées pour effectuer la purification sous forme de boue activée, et
le groupe bactérien de purification utile (34) est fixé à l'état en vrac, et il existe un gradient de concentration en oxygène dissous dans le groupe bactérien de purification utile lorsque le flux d'eau dans le système d'eau converge vers le canal d'eau (1100).

13. Dispositif de purification selon la revendication 12, dans lequel
la couche de filtration biologique (3000) comporte une couche de sable.
